Europäisches Patentamt

European Patent Office

Office européen des brevets

(11) Veröffentlichungsnummer: **0 322 599 B1**

(12) **EUROPÄISCHE PATENTSCHRIFT**

(45) Veröffentlichungstag der Patentschrift: **11.11.92**

(21) Anmeldenummer: **88120327.7**

(22) Anmeldetag: **06.12.88**

(51) Int. Cl.⁵: **B60K 28/14**, B60T 7/12

(54) **Sicherheitseinrichtung in einem Kraftfahrzeug.**

(30) Priorität: **24.12.87 DE 3744264**

(43) Veröffentlichungstag der Anmeldung:
**05.07.89 Patentblatt 89/27**

(45) Bekanntmachung des Hinweises auf die
Patenterteilung:
**11.11.92 Patentblatt 92/46**

(84) Benannte Vertragsstaaten:
**DE FR GB IT SE**

(56) Entgegenhaltungen:
**EP-A- 0 027 747**
**EP-A- 0 064 888**
**DE-A- 2 341 637**
**DE-A- 3 332 664**
**US-A- 2 878 885**

(73) Patentinhaber: **MAN Nutzfahrzeuge GmbH**
**Dachauer Strasse 667 Postfach 50 06 20**
**W-8000 München 50(DE)**

(72) Erfinder: **Görge, Werner, Dr.Dipl.-Ing.**
**Pötschenerstrasse 21**
**W-8035 Gauting(DE)**

Rank Xerox (UK) Business Services

## Beschreibung

Die Erfindung betrifft eine Sicherheitseinrichtung in einem Kraftfahrzeug zur Verhütung von Folgeschäden nach Unfällen, hervorgerufen durch Brandentstehung, weiterlaufender Antriebseinrichtung, defekter Bremsanlage und dergleichen.

Sicherheitseinrichtungen zur Brandverhütung nach Unfällen, bei denen der Stromkreis unterbrochen wird, sind beispielsweise aus der DE-AS 23 44 425, DE-OS 23 41 637 und DE-OS 23 46 856 bekannt. Als auslösende Organe kommen dort Trägheitsschalter zur Anwendung.

Ferner ist aus der DE-OS 24 05 749 eine Sicherheitseinrichtung für ein Kraftfahrzeug bekannt, bei dem auf einen Unfall ansprechende Schalter geschlossen werden und dann über eine zugeordnete Schaltautomatik der Motor abgeschaltet, der Stromkreis unterbrochen und die Warnblinkanlage eingeschaltet wird. Die entsprechenden Schalter sind relativ kompliziert. Außerdem kann ein ungewolltes Aktivieren derselben nicht mit hinreichender Sicherheit ausgeschlossen werden.

An sich können mit dieser Einrichtung aber durchaus bei einem Unfall ein Brand durch Kurzschluß und eine Gefährdung nachfolgender Verkehrsteilnehmer, zum Beispiel durch ungewolltes Weiterfahren oder Wiederingangsetzen des Fahrzeugs verhindert werden. Ein Weiterlaufen oder ein unbeabsichtigtes Inbewegungsetzen des Fahrzeugs kann jedoch nicht im letzter Sicherheit ausgeschlossen werden, weil der abgestellte Motor hierfür allein keine Garantie geben kann, was insbesondere dann der Fall sein kann, wenn der Fahrer und gegebenenfalls auch der Beifahrer nicht mehr handlungsfähig sind.

Es ist daher Aufgabe der Erfindung, eine Sicherheitseinrichtung zu schaffen, die nur dann, wenn wirklich notwendig, sicherheitsrelevante Vorgänge auslöst und über die Brandverhütung hinaus nach einem Unfall auch sicher für einen Verbleib des Fahrzeugs am Unfallort sorgt, d. h. auch ein ungewolltes Bewegen danach wirksam verhindert.

Diese Aufgabe ist erfindungsgemäß durch eine Sicherheitseinrichtung mit den im Kennzeichen des Anspruchs angegebenen Merkmalen gelöst.

Mit der erfindungsgemäßen Sicherheitseinrichtung können Folgeschäden nach einem Unfall deshalb wirksam verhindert werden, weil das Fahrzeug stromlos gemacht ist, somit Brandentstehung ausgeschaltet ist, außerdem, weil der Motor abgeschaltet ist, somit das Fahrzeug ohne Antrieb ist, und schließlich, weil durch Einlegen der Feststellbremse das Fahrzeug am Unfallort festgelegt ist. Das bedeutet, daß insbesondere bei schweren Unfällen, bei denen Fahrer und gegebenenfalls Beifahrer handlungsunfähig werden, das Fahrzeug nicht unkontrolliert weiterfahren und andere Verkehrsteilnehmer gefährden oder gar weitere Unfälle hervorrufen kann.

Aufgrund der elektronischen Auswertung der von den Sensoren gelieferten Meßwerte hinsichtlich Wert- und Zeit ist es möglich, Fehlfunktionen der Sicherheitseinrichtung praktisch vollständig auszuschalten, denn nur wirklich unfallrelevante Signale führen letztendlich zur Auslösung der möglichen Schaltoperationen durch das Steuergerät.

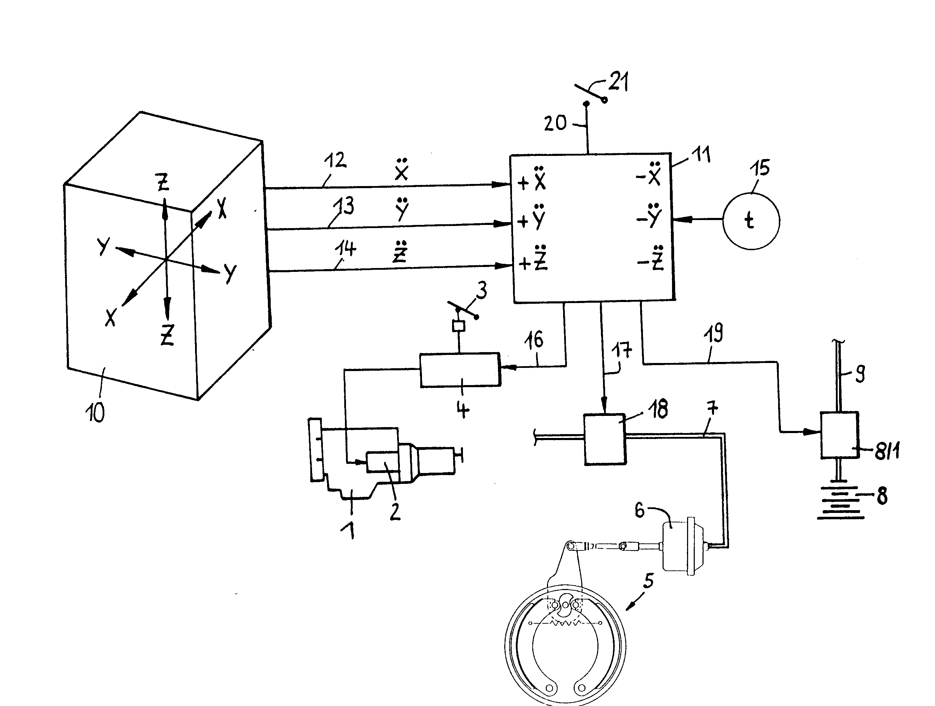

Nachstehend ist die erfindungsgemäße Lösung anhand eines in der Zeichnung dargestellten Ausführungsbeispieles noch näher erläutert.

In der Zeichnung sind schematisch als Teile eines des weiteren nicht dargestellten Kraftfahrzeugs dessen Antriebsmotor 1 mit Einspritzpumpe 2, die zugehörige, zur Füllungsregelung dienende und normalerweise vom Fahrer über ein Pedal 3 betätigbare E-Gas-Einrichtung 4 (elektronische, pedalwegabhängige Füllungssteuerung), die radseitig wirkenden Feststellbremsen 5 mit Bremszylinder 6 und zugehörigem Druckmittelkreis 7, sowie die Batterie 8 mit zugehörigem Batteriehauptschalter 8/1, der in den fahrzeuginternen Stromkreis 9 eingeschaltet ist, dargestellt.

Als Teile der Sicherheitseinrichtung sind an geeigneten Stellen des Fahrzeugs befestigte Sensoren 10 (nur einer dargestellt), sowie ein elektronisches Steuergerät 11 dargestellt.

Als Sensoren 10 sind handelsübliche Dreikomponentensensoren verwendet, die die Beschleunigungswerte des Fahrzeugs in X-,Y- und Z-Richtung mit einer Frequenz unter 10 Hz messen und diese erfaßten Werte über jeweils eine richtungsspezifische Leitung 12 (X-Richtung), 13 (Y-Richtung), 14 (Z-Richtung) an das Steuergerät 11 weiterleiten. Diese Meßwerte sind mit $\ddot{X},\ddot{Y}$ und $\ddot{Z}$ bezeichnet.

Im Steuergerät 11 werden diese Meßwerte $\ddot{X}$, $\ddot{Y},\ddot{Z}$ auf elektronischem Wege mit vorgegebenen positiven Grenzwerten $(+\ddot{X}, +\ddot{Y}, +\ddot{Z})$ und negativen Grenzwerten $(-\ddot{X},-\ddot{Y},-\ddot{Z})$ wertmäßig und hinsichtlich ihrer Zeitdauer verglichen, wozu eine Zeitbezugsquelle 15 herangezogen wird.

Wird ein unfallrelevanter Grenzwert überschritten und durch einen solchen internen Vergleich vom Steuergerät 11 erkannt, dann gibt das Steuergerät 11 zunächst über eine Steuerleitung 16 einen Befehl an die E-Gas-Einrichtung 4 aus, wodurch der Motor 1 abgestellt wird, anschließend gibt sie über eine Steuerleitung 17 einen Befehl an einen im Druckmittelkreis der Feststellbremsen 5 gelegenen Schalter 18, womit die Feststellbremsen 5 aktiviert werden, und zuletzt gibt sie einen Befehl über die Steuerleitung 19 an den Batteriehauptschalter 8/1 aus, wodurch dieser betätigt und der Stromkreis des Fahrzeugs unterbrochen wird.

Diese Schaltfunktionen des Steuergerätes 11 können durch Einleitung entsprechender Befehle von außen über eine Steuerleitung 20, z. B. durch Schließen eines Schalters 21 vom Fahrer, außer Kraft gesetzt werden, so daß dann aufgrund der Inaktivierung des Steuergeräts 11 die E-Gas-Einrichtung 4, der Batteriehauptschalter 8/1 und die Feststellbremsen 5 normal zu betätigen sind.

## Patentansprüche

1. Sicherheitseinrichtung in einem Kraftfahrzeug zur Verhütung von Folgeschäden nach einem Unfall, wobei am Fahrzeug befestigte Sensoren (10) vorgesehen sind, die auftretende Beschleunigungen messen und diese Meßwerte einem Steuergerät (11) zuleiten, von dem diese Meßwerte mit wenigstens einer zugehörigen, vorgegebenen Größe verglichen und bei Überschreiten derselben Befehle an Schaltorgane (4, 18, 8/1) ausgegeben werden, durch die bestimmte, sicherheitsrelevante Einrichtungen des Fahrzeugs gesteuert werden, dadurch gekennzeichnet, daß als Sensoren (10) Dreikomponentensensoren verwendet werden, die die Beschleunigungswerte des Fahrzeugs in X-, Y- und Z-Richtung mit einer Frequenz unter 10Hz messen, daß diese gemessenen X-, Y- und Z-Beschleunigungswerte im Steuergerät (11) auf elektronischem Wege mit vorgegebnen positiven ($+\ddot{X}$, $+\ddot{Y}$, $+\ddot{Z}$) und negativen Grenzwerten ($-\ddot{X}$, $-\ddot{Y}$, $-\ddot{Z}$) verglichen und auch hinsichtlich ihrer Zeitdauer ausgewertet werden, und daß vom Steuergerät (11) dann, wenn ein unfallrelevanter Grenzwert als überschritten erkannt ist, zur Verhütung von nach einem Unfall durch Brandentstehung, weiterlaufender Antriebseinrichtung, defekter Bremsanlage und dergleichen möglichen Folgeschäden zunächst der Antriebsmotor (1) über eine fahrzeuginterne E-Gas-Einrichtung (4) abgestellt wird, dann die Feststellbremsen (5) aktiviert werden und dann der Betriebsstromkreis (9) des Fahrzeugs über den Batteriehauptschalter (8/1) unterbrochen wird, und daß die diese sicherheitsrelevanten Operationen auslösenden Schaltfunktionen des Steuergerätes (11) durch Einleitung entsprechender Befehle von außen außer Kraft setzbar sind.

## Claims

1. A safety device in a motor vehicle for preventing subsequent damage after an accident, wherein sensors (10) which are attached to the vehicle are provided which measure accelerations occurring and feed these measured values to a control device (11), by means of which these measured values are compared with at least one associated predetermined value and, if the same is exceeded, commands are given to switching members (4, 18, 8/1), through which specific, safety-related devices of the vehicle are controlled, characterised in that triaxial sensors are used as sensors (10) and measure the acceleration values of the vehicle in X, Y and Z directions with a frequency below 10Hz, in that these measured X, Y and Z acceleration values are compared electronically in the control device (11) with predetermined positive ($+\ddot{X}$, $+\ddot{Y}$, $+\ddot{Z}$) and negative ($-\ddot{X}$, $-\ddot{Y}$, $-\ddot{Z}$) limit values and are also evaluated with respect to their duration, and in that when an accident-related limit value is recognised by the control device (11) as exceeded, in order to prevent possible subsequent damage caused after an accident by fire, drive arrangement continuing to run, defective brake system and the like, the drive motor (1) is firstly switched off via a vehicle-internal E-gas arrangement (4), the emergency brakes (5) are then activated and the operating circuit (9) of the vehicle is then interrupted via the main battery switch (8/1), and in that the switching functions of the control device (11), which trigger these safety-related operations, can be cancelled by actuating corresponding commands.

## Revendications

1. Dispositif de sécurité dans un véhicule à moteur pour une protection contre les conséquences dommageables d'un accident, dans lequel sont prévus des capteurs (10) fixés sur le véhicule, qui mesurent les accélérations survenant et acheminent ces valeurs de mesure vers un appareil de commande (11), grâce auquel ces valeurs de mesure sont comparées avec au moins une grandeur correspondante, prédéfinie et en cas de dépassement de celle-ci délivrent des ordres à des organes de commutation (4, 18, 8/1), par lesquels sont commandés les dispositifs de sécurité concernés du véhicule, dispositif de sécurité caractérisé en ce que l'on utilise comme capteurs (10) des capteurs à trois composantes qui mesurent les valeurs d'accélération du véhicule dans les directions X, Y et Z avec une fréquence inférieure à 10 Hz, en ce que ces valeurs mesurées X, Y et Z d'accélération sont comparées dans l'appareil de commande (11) par voie électronique avec des valeurs limites positives ($+\ddot{X}$, $+\ddot{Y}$, $+\ddot{Z}$) et des valeurs limites négatives ($-\ddot{X}$, $-\ddot{Y}$, $-\ddot{Z}$) et sont aussi exploitées en ce qui concerne leur durée et en ce que, quand une valeur limite correspondant à un accident a été détectée comme étant dépassée, on débranche alors par l'appareil de commande (11) d'abord le moteur d'entraînement (1) par l'intermédiaire d'un dispositif de réglage des gaz (4) interne au véhicule, puis on actionne les freins de blocage et on interrompt ensuite le circuit de courant (9) du véhicule au moyen du coupe batterie principal (8/1) pour se protéger lors de la naissance d'un incendie après un accident d'un dispositif d'entraînement continuant à marcher, d'une installation de frein défectueuse et des suites dommageables possibles de ce type, et en ce que les fonctions de commutation déclenchant ces opérations nécessaires à la sécurité peuvent être annulées de l'extérieur par l'introduction d'ordres correspondants.